# FASCICULE DE BREVET EUROPEEN

(11) **EP 3 670 350 B1**
(45) Date de publication et mention de la délivrance du brevet: **24.03.2021**
(21) Numéro de dépôt: 19212059.0
(22) Date de dépôt: 28.11.2019
(51) Int. Cl.: B64D 29/08, B64D 27/18

(54) **ENSEMBLE PROPULSIF D'UN AÉRONEF COMPRENANT UN CARÉNAGE DE JONCTION ENTRE UNE NACELLE ET UN MÂT DE L AÉRONEF ÉQUIPÉ D'UN CAPOT AMOVIBLE ET AÉRONEF ÉQUIPÉ DUDIT ENSEMBLE PROPULSIF**
ANTRIEBSEINHEIT EINES LUFTFAHRZEUGS, DIE EINE VERBINDUNGSVERKLEIDUNG ZWISCHEN EINER GONDEL UND EINEM MAST EINES LUFTFAHRZEUGS UMFASST, DIE MIT EINER ENTFERNBAREN ABDECKUNG AUSGESTATTET IST, UND MIT EINER SOLCHEN ANTRIEBSEINHEIT AUSGESTATTETES LUFTFAHRZEUG
PROPULSION ASSEMBLY OF AN AIRCRAFT COMPRISING A CONNECTING FAIRING BETWEEN A NACELLE AND A PYLON OF THE AIRCRAFT PROVIDED WITH A REMOVABLE COVER AND AIRCRAFT PROVIDED WITH SAID PROPULSION ASSEMBLY

(30) Priorité: 21.12.2018 FR 1873824
(43) Date de publication de la demande: 24.06.2020
(73) Titulaire: AIRBUS OPERATIONS (S.A.S.), 31060 Toulouse (FR)
(72) Inventeur: GELIOT, Jean, 31060 TOULOUSE Cedex 9 (FR); LABARTHE, Christophe, 31060 TOULOUSE Cedex 9 (FR)
(74) Mandataire: Gicquel, Olivier Yves Gérard

(56) Documents cités:
- EP-A1- 2 392 509
- WO-A1-2008/006826
- FR-A1- 2 902 406
- FR-A1- 2 920 409

## Description

La présente demande se rapporte à un ensemble propulsif d'un aéronef comprenant un carénage de jonction entre une nacelle et un mât de l'aéronef équipé d'un capot amovible ainsi qu'à un aéronef équipé dudit ensemble propulsif.

Selon un mode de réalisation, un ensemble propulsif comprend un turboréacteur et une nacelle, dans laquelle est positionné le turboréacteur, ainsi qu'un mât reliant le turboréacteur à la voilure de l'aéronef. L'extrémité avant du mât et la nacelle comportent un carénage de jonction également appelé casquette. Ce carénage de jonction comprend une paroi présentant une première zone bombée, conformée comme le mât, prolongée de chaque côté et à l'avant par une deuxième zone conformée comme la nacelle. Cette paroi est reliée à la structure de la nacelle et/ou du mât par une liaison permettant d'absorber d'éventuels désalignements et/ou déformations générés en fonctionnement, en raison notamment de la poussée du turboréacteur. Cette liaison, relativement complexe, n'est pas facile à démonter et remonter si bien qu'il est difficile d'accéder à l'intérieur de la nacelle, sous le carénage de jonction, pour des opérations de maintenance ou d'inspection.

La présente invention vise à remédier à tout ou partie des inconvénients de l'art antérieur. La demande de brevet WO2008/006826 décrit le préambule de la revendication 1.

A cet effet, l'invention a pour objet un ensemble propulsif d'un aéronef tel que revendiqué à la revendication 1.

Le carénage de jonction de l'invention permet d'absorber d'éventuelles déformations et/ou désalignements entre la nacelle et le mât en fonctionnement, tout en permettant d'accéder facilement à une zone située sous le carénage de jonction. Selon l'invention, la liaison du carénage de jonction permettant d'absorber d'éventuelles déformations et/ou désalignements entre la nacelle et le mât est dissociée de la liaison permettant d'accéder à la zone située sous le carénage de jonction.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue en perspective du dessus d'un ensemble propulsif,
- La figure 3 est une vue en perspective d'un carénage de jonction qui illustre un mode de réalisation de l'invention en position fermée,

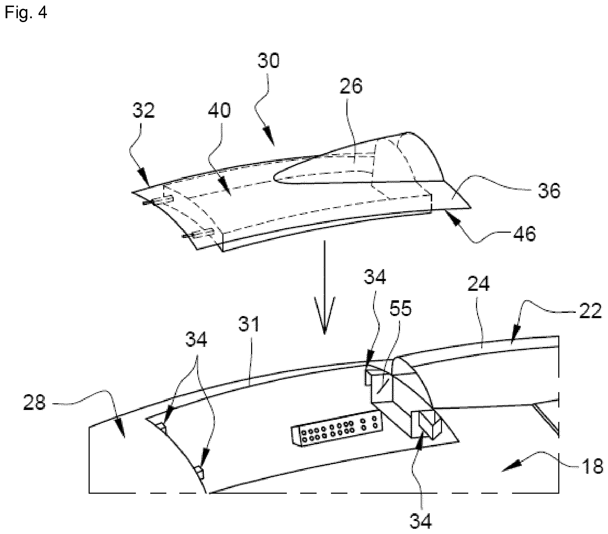

- La figure 4 est une vue en perspective du carénage de jonction, visible sur la figure 3, à l'état démonté,
- La figure 5 est une vue en perspective d'une liaison avant du carénage de jonction qui illustre un mode de réalisation de l'invention,
- La figure 6 est une vue en perspective d'une liaison arrière du carénage de jonction qui illustre un mode de réalisation de l'invention,
- La figure 7 est une vue en perspective du carénage de jonction, visible sur la figure 3, en position ouverte,

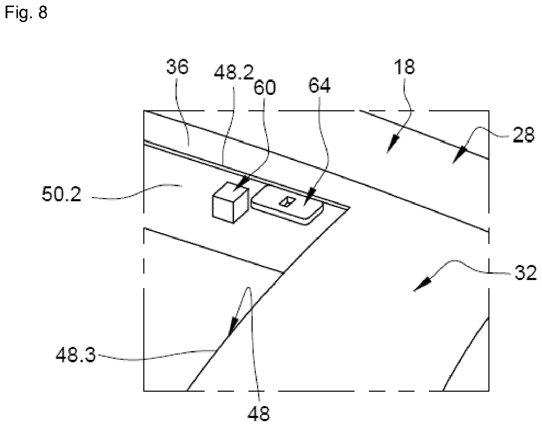

- La figure 8 est une vue en perspective d'une partie des systèmes de centrage et de verrouillage d'un capot du carénage de jonction qui illustre un mode de réalisation de l'invention,
- La figure 9 est une coupe d'un système de centrage du capot du carénage de jonction qui illustre un mode de réalisation de l'invention, et
- La figure 10 est une coupe d'un système de verrouillage du capot du carénage de jonction qui illustre un mode de réalisation de l'invention.

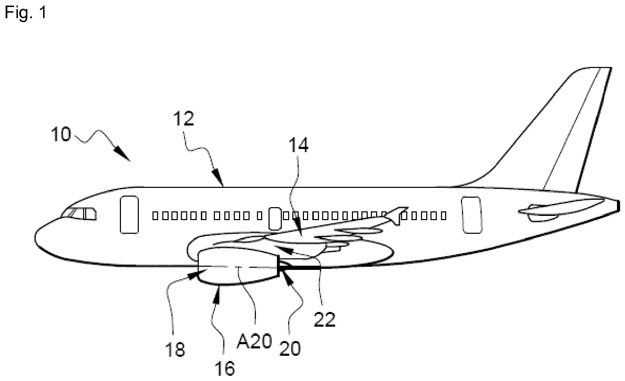

Sur la figure 1, on a représenté un aéronef 10 qui comprend un fuselage 12, des ailes 14 ainsi que des ensembles propulsifs 16 reliés chacun à une des ailes 14. Chaque ensemble propulsif 16 comprend une nacelle 18, un turboréacteur 20, positionné à l'intérieur de la nacelle, et un mât 22 reliant le turboréacteur 20 à l'une des ailes 14.

Pour la suite de la description, une direction longitudinale est une direction parallèle à l'axe du turboréacteur A20. Un plan longitudinal est un plan contenant l'axe du turboréacteur A20. Un plan transversal est un plan perpendiculaire à l'axe du turboréacteur A20. Les termes « avant » et « arrière » font référence au sens du flux d'air traversant le turboréacteur 20, ce dernier allant d'avant en arrière.

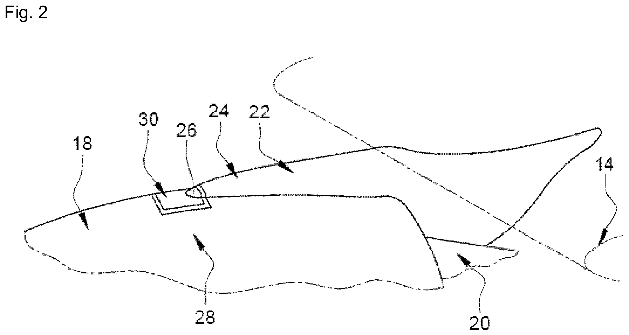

Comme illustré sur la figure 2, le mât 22 comprend une structure secondaire 24, assurant la fonction de carénage aérodynamique, en forme de gouttière inversée qui présente une pointe avant 26 en biseau. La nacelle 18 comprend une paroi extérieure 28, assurant la fonction de carénage aérodynamique, qui présente, à l'avant du mât 22 et au droit du mât 22, une forme approximativement cylindrique.

L'ensemble propulsif 16 comprend un carénage de jonction 30 (également appelé casquette) assurant une continuité entre le mât 22 et la nacelle 18. Ce carénage de jonction 30 présente une surface extérieure comprenant une première zone bombée, conformée comme le mât, prolongée de chaque côté et à l'avant par une deuxième zone, présentant dans un plan transversal une courbure, conformée comme la nacelle. Le carénage de jonction 30 est délimité par un bord périphérique qui peut être identique à celui d'un carénage de jonction de l'art antérieur.

La nacelle 18 et le mât 22 comprennent une découpe 31 dont les formes épousent celles du bord périphérique du carénage de jonction 30 de manière à assurer une continuité entre les surfaces de la nacelle 18 et du mât 22 et celles du carénage de jonction 30.

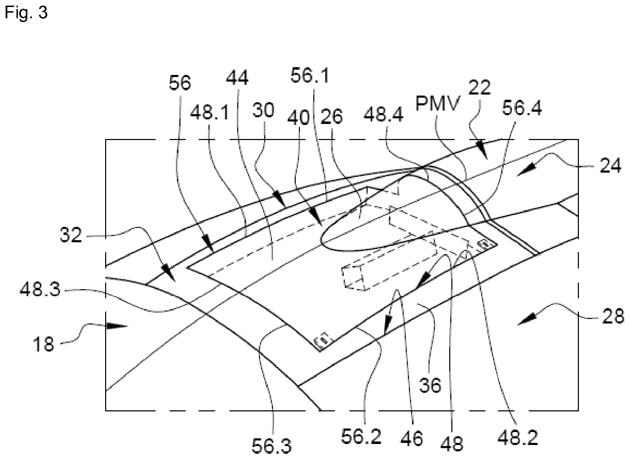

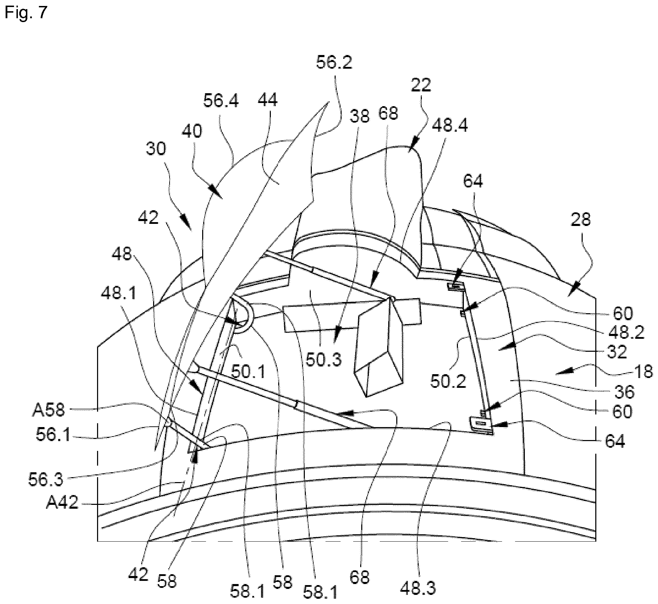

Selon une caractéristique de l'invention, le carénage de jonction 30 comprend un châssis fixe 32 relié à la nacelle 18 et au mât 22 par un système de liaison 34 configuré pour absorber d'éventuelles déformations et/ou désalignements entre la nacelle 18 et le mât 22 en fonctionnement, ledit châssis fixe 32 comportant une paroi extérieure 36 dans laquelle est prévue une ouverture 38 (visible sur la figure 7) permettant d'accéder à l'intérieur de la nacelle 18. En complément du châssis fixe 32, le carénage de jonction 30 comprend un capot 40, relié au châssis fixe 32 par au moins une articulation 42, ledit capot 40 étant mobile entre une position fermée dans laquelle il obture l'ouverture 38 (comme illustré sur la figure 3) et une position ouverte dans laquelle il dégage au moins partiellement l'ouverture 38 (comme illustré sur la figure 7).

Le capot 40 comprend un panneau 44 qui présente une surface extérieure qui affleure la surface extérieure de la paroi extérieure 36 du châssis fixe 32.

Selon un mode de réalisation, la paroi extérieure 36 du châssis fixe 32 comprend un bord périphérique extérieur 46, rectangulaire en vue de dessus, qui épouse le pourtour de la découpe 31 de la nacelle 18 et du mât 22, et un bord périphérique intérieur 48 (visible sur la figure 7), rectangulaire en vue de dessus, qui délimite l'ouverture 38. Selon une configuration, le bord périphérique intérieur 48 est centré approximativement à l'intérieur du bord périphérique extérieur 46.

Le bord périphérique intérieur 48 comprend deux côtés droit et gauche 48.1, 48.2, parallèles entre eux et parallèles à la direction longitudinale, deux côtés avant et arrière 48.3, 48.4 perpendiculaires à la direction longitudinale. Les deux côtés droit et gauche 48.1, 48.2 sont approximativement rectilignes. Le côté avant 48.3 est légèrement courbe. Le côté arrière 48.4 a une forme en oméga et présente une portion centrale en U inversé avec de part et d'autre un prolongement légèrement courbe.

Le châssis fixe 32 comprend des parois latérales droite, gauche avant et arrière 50.1 à 50.4 positionnés respectivement à l'aplomb des côtés droit, gauche, avant et arrière 48.1 à 48.4 perpendiculaires entre elles deux à deux.

Le châssis fixe 32 est approximativement symétrique par rapport à un plan médian vertical PMV, passant par l'axe du turboréacteur A20.

Le système de liaison 34 comprend au moins une liaison avant 52 et au moins une liaison arrière 54.

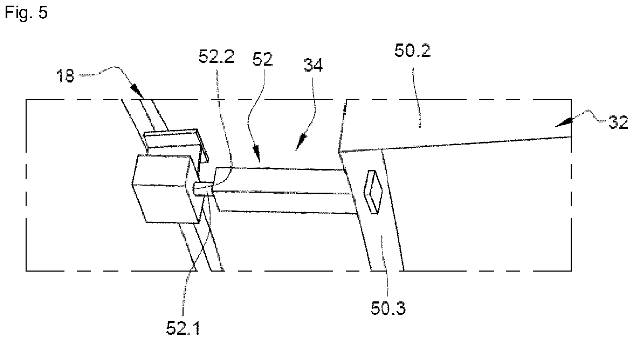

Le système de liaison 34 comprend deux liaisons avant 52 positionnées de manière symétrique par rapport au plan médian vertical PMV. Chaque liaison avant 52 est une liaison annulaire autorisant un mouvement de translation selon une direction approximativement parallèle à la direction longitudinale. Selon un mode de réalisation visible sur la figure 5, chaque liaison avant 52 comprend un doigt 52.1, cylindrique, solidaire du châssis fixe 32, orienté parallèlement à la direction longitudinale, un guide 52.2 solidaire de la nacelle 18 présentant un orifice, ayant un diamètre égal à celui du doigt 52.1, positionné dans un plan transversal. Selon une configuration, pour chaque liaison avant 52, le doigt 52.1 est solidaire de la paroi avant 50.3.

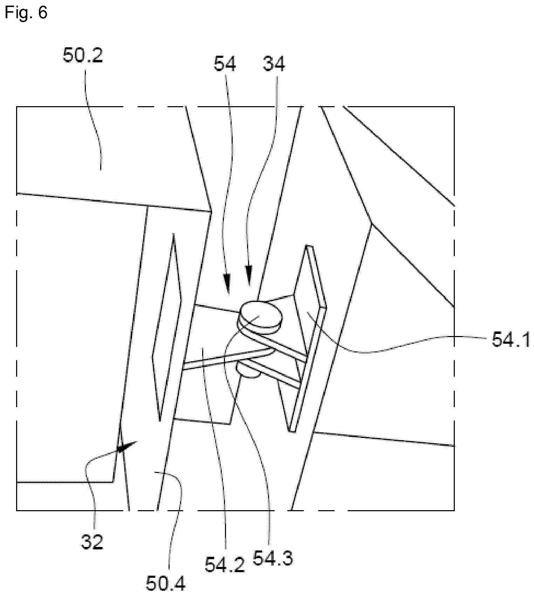

Le système de liaison 34 comprend deux liaisons arrière 54 positionnées de manière symétrique par rapport au plan médian vertical PMV. Chaque liaison arrière 54 est une liaison pivot autorisant un mouvement de rotation autour d'un axe de rotation horizontal et perpendiculaire à la direction longitudinale. Selon un mode de réalisation visible sur la figure 6, chaque liaison arrière 54 comprend une chape 54.1 solidaire de la nacelle 18 et/ou du mât 22 qui présente deux branches entre lesquelles est positionnée une platine 54.2 solidaire du châssis fixe 32, la chape 54.1 et la platine 54.2 étant reliées par un axe de rotation 54.3. Selon une configuration, pour chaque liaison arrière 54, la platine 54.2 est solidaire de la paroi arrière 50.4 et la chape 54.1 est fixée à un support 55 solidaire de la nacelle 18 et/ou du mât 22.

Bien entendu, l'invention n'est pas limitée à ce mode de réalisation pour le système de liaison 34 qui pourrait être identique aux modes de réalisation de l'art antérieur.

Le panneau 44 du capot 40 présente un contour 56 sensiblement identique au bord périphérique intérieur 48 de la paroi extérieure 46 du châssis fixe 42 de sorte que la surface extérieure du panneau 44 du capot 40 affleure la surface extérieure de la paroi extérieure 36 du châssis fixe 32. Le contour 56 comprend deux côtés droit et gauche 56.1, 56.2 et deux côtés avant et arrière 56.3, 56.4. Les deux côtés droit et gauche 56.1, 56.2 sont approximativement rectilignes, comme les côtés droit et gauche 48.1, 48.2 du bord périphérique intérieur 48 du panneau extérieur 46 du châssis fixe 32. Le côté avant 56.3 est légèrement courbe, comme le côté avant 48.3 du bord périphérique intérieur 48 du panneau extérieur 46 du châssis fixe 32. Le côté arrière 56.4 a une forme en oméga et présente une portion centrale en U inversé avec de part et d'autre un prolongement légèrement courbe, comme le côté arrière 48.4 du bord périphérique intérieur 48 du panneau extérieur 46 du châssis fixe 32.

Selon un mode de réalisation, l'articulation 42 est une liaison pivotante permettant au capot 40 de pivoter autour d'un axe de pivotement A42, positionné à proximité d'un premier côté du capot 40, approximativement parallèle à la direction longitudinale. Selon une configuration, l'articulation 42 comprend deux charnières 58 positionnées à proximité des extrémités d'un des côtés 56.1, 56.2 (droit ou gauche) du panneau 44 du capot 40. Chaque charnière 58 comprend un col de cygne 58.1 dont une première extrémité est reliée au châssis fixe 32 par un axe de rotation parallèle à la direction longitudinale et une deuxième extrémité est reliée au panneau 44 du capot 40 par un axe de rotation A58 parallèle à la direction longitudinale.

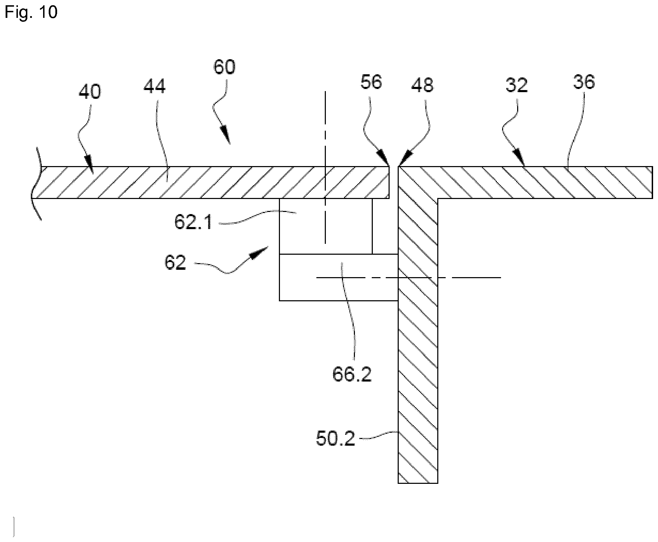

Selon un mode de réalisation, le carénage de jonction 30 comprend un système de verrouillage 60 configuré pour maintenir le capot 40 en position fermée. Selon une configuration, le système de verrouillage 60 comprend deux loquets 62 positionnés à proximité des extrémités d'un côté 56.1, 56.2 du panneau 44 opposé à celui supportant les charnières 58. Selon un mode de réalisation visible sur la figure 10, chaque loquet 62 comprend une première partie 62.1 solidaire du panneau 44 du capot 40 et une deuxième partie 62.2 solidaire du châssis fixe 32, configurées pour occuper un état verrouillé dans lequel les première et deuxième parties 62.1 et 62.2 sont immobiles l'une par rapport à l'autre et maintiennent le capot 40 en position fermée ainsi qu'un état déverrouillé dans lequel les première et deuxième parties 62.1 et 62.2 ne sont plus immobilisées l'une par rapport à l'autre et autorisent un mouvement d'ouverture du capot 50.

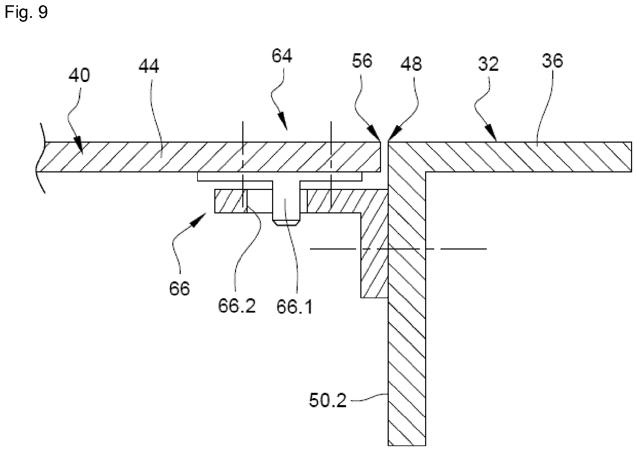

Selon un mode de réalisation, le carénage de jonction 30 comprend un système de centrage 64 configuré pour immobiliser le capot 40 selon la direction longitudinale (parallèle à la direction d'écoulement d'un flux d'air s'écoulant sur la surface aérodynamique du carénage de jonction 30 en fonctionnement) lorsqu'il est dans la position fermée. Selon un mode de réalisation, le système de centrage 64 comprend deux centreurs 66 positionnés à proximité des extrémités d'un côté 56.1, 56.2 du panneau 44 opposé à celui supportant les charnières 58. Selon un mode de réalisation visible sur la figure 9, chaque centreur 66 comprend un pion 66.1 solidaire du capot 40 et un logement 66.2 solidaire du châssis fixe 32, le pion 66.1 et le logement 66.2 étant configurés pour occuper un état engagé, lorsque le capot est en position fermée, dans lequel le pion 66.1 est positionné dans le logement 66.2 et un état désengagé dans lequel le pion 66.1 est positionné à l'extérieur du logement 66.2. Le pion 66.1 présente une première dimension prise selon la direction longitudinale sensiblement identique à une deuxième dimension du logement 66.2 prise également selon la direction longitudinale. Ainsi, dans l'état engagé, le pion 66.1 est immobilisé en translation selon la direction longitudinale par rapport au logement 66.2. Pour favoriser l'introduction du pion 66.1, le logement 66.2 a une forme oblongue qui présente une grande dimension orientée perpendiculairement à la direction longitudinale et une petite dimension orientée parallèlement à la direction longitudinale qui a une dimension approximativement égale à la première dimension du pion 66.1. Bien entendu, l'invention n'est pas limitée à ce mode de réalisation. Ainsi, le pion 66.1 pourrait être solidaire du châssis fixe 32 et le logement 66.2 pourrait être solidaire du capot 40.

Selon une configuration, l'articulation 42 est positionnée au niveau de la paroi droite 50.1 du châssis fixe 32 et les systèmes de verrouillage et de centrage 60, 64 sont positionnés au niveau de la paroi gauche 50.2.

Selon un mode de réalisation, le carénage de jonction 30 comprend au moins un actionneur 68 pour favoriser le mouvement d'ouverture du capot 40 et/ou pour le maintenir en position ouverte. Selon une configuration, le carénage de jonction 30 comprend deux actionneurs 68 positionnés au niveau des côtés avant et arrière 56.3, 56.4 du panneau 44 du capot 40. Chaque actionneur 68 se présente sous la forme d'un vérin pneumatique comportant une première extrémité 68.1 reliée au châssis fixe 32, plus précisément à la paroi avant ou arrière 50.3, 50.4, en un point écarté de l'articulation 42, et une deuxième extrémité 68.2 reliée au panneau 44 du capot 40, en un point écarté de l'articulation 42.

En fonctionnement, le capot 40 est maintenu en position fermée par le système de verrouillage 60. La paroi extérieure 36 du châssis fixe 32 et le panneau 44 du capot 40 forment une surface aérodynamique sensiblement analogue à celle d'un carénage de jonction de l'art antérieur. Pour une inspection ou une opération de maintenance nécessitant d'accéder à une zone située sous le carénage de jonction 30, il suffit de basculer le système de verrouillage 60 à l'état déverrouillé et de pivoter le capot 40 autour de l'axe de pivotement A42 de l'articulation 42. Le ou les actionneur(s) 68 favorise(nt) l'ouverture du capot 40 et son maintien en position ouverte. Après l'intervention, le capot 40 est pivoté en position fermée et le système de verrouillage 60 est basculé à l'état verrouillé.

Selon un autre mode de réalisation, le capot 40 pourrait être relié au châssis fixe 32 grâce à une liaison démontable pour permettre de le désolidariser du châssis fixe 32.

Quel que soit le mode de réalisation, le carénage de jonction comprend :
- un châssis fixe 32, relié à la nacelle 18 et au mât 22 par un système de liaison 34 configuré pour absorber d'éventuelles déformations et/ou désalignements entre la nacelle 18 et le mât 22 en fonctionnement, qui présente une paroi extérieure 36 comprenant une ouverture 38,
- un capot 40, mobile entre une position fermée dans laquelle il obture l'ouverture 38 et une position ouverte dans laquelle il dégage au moins partiellement l'ouverture 38, qui présente un panneau 44,
- la paroi extérieure 36 du châssis fixe et le panneau 44 du capot 40 présentant des surfaces extérieures qui forment la surface aérodynamique du carénage de jonction.

Ainsi, le carénage de jonction 30 de l'invention permet d'absorber d'éventuelles déformations et/ou désalignements entre la nacelle 18 et le mât 22 en fonctionnement, tout en procurant un accès aisé à l'intérieur de la nacelle.

## Revendications

1. Ensemble propulsif d'un aéronef comprenant une nacelle (18), un mât (22) ainsi qu'un carénage de jonction (30) présentant une surface aérodynamique assurant une continuité entre la nacelle (18) et le mât (22), le carénage de jonction (30) comprend un châssis fixe (32), relié à la nacelle (18) et au mât (22) par un système de liaison (34) configuré pour absorber d'éventuelles déformations et/ou désalignements entre la nacelle (18) et le mât (22) en fonctionnement, **caractérisé en ce que** le châssis fixe (32) présente une paroi extérieure (36) comprenant une ouverture (38), et **en ce que** le carénage de jonction (30) comprend en outre
- un capot (40), mobile entre une position fermée dans laquelle le capot (40) obture l'ouverture (38) et une position ouverte dans laquelle le capot (40) dégage au moins partiellement l'ouverture (38), qui présente un panneau (44),
- la paroi extérieure (36) du châssis fixe (32) et le panneau (44) du capot (40) présentant des surfaces extérieures qui forment la surface aérodynamique du carénage de jonction (30).

2. Ensemble propulsif selon la revendication 1, **caractérisé en ce que** le panneau (44) du capot (40) présente un contour (56) sensiblement identique à un bord périphérique intérieur (48) de la paroi extérieure (46) délimitant l'ouverture (38) de sorte que la surface extérieure du panneau (44) du capot (40) affleure la surface extérieure de la paroi extérieure (36) du châssis fixe (32).

3. Ensemble propulsif selon la revendication 1 ou 2, **caractérisé en ce que** le carénage de jonction (30) comprend au moins une articulation (42) reliant le capot (40) et le châssis fixe (32).

4. Ensemble propulsif selon la revendication précédente, **caractérisé en ce que** l'articulation (42) est une liaison pivotante permettant au capot (40) de pivoter autour d'un axe de pivotement (A42).

5. Ensemble propulsif selon la revendication 3 ou 4, **caractérisé en ce que** le carénage de jonction (30) comprend un système de verrouillage (60) configuré pour maintenir le capot (40) en position fermée.

6. Ensemble propulsif selon la revendication précédente, **caractérisé en ce que** l'articulation (42) est positionnée à proximité d'un premier côté (56.1, 56.2) du capot (40) et **en ce que** le système de verrouillage (60) est positionné au niveau d'un deuxième côté (56.1, 56.2) du capot (40) opposé au premier côté (56.1, 56.2).

7. Ensemble propulsif selon l'une des revendications 3 à 6, **caractérisé en ce que** le carénage de jonction (30) comprend un système de centrage (64) configuré pour immobiliser le capot (40) selon une direction d'écoulement d'un flux d'air s'écoulant sur la surface aérodynamique du carénage de jonction (30) en fonctionnement.

8. Ensemble propulsif selon la revendication précédente, **caractérisé en ce que** le système de centrage (64) comprend au moins un centreur (66) comportant un pion (66.1) solidaire du capot (40) et un logement (66.2) solidaire du châssis fixe (32), le pion (66.1) et le logement (66.2) étant configurés pour occuper un état engagé, lorsque le capot (40) est en position fermée, dans lequel le pion (66.1) est positionné dans le logement (66.2), et un état désengagé dans lequel le pion (66.1) est positionné à l'extérieur du logement (66.2), le pion (66.1) présentant une première dimension prise selon la direction d'écoulement sensiblement identique à une deuxième dimension du logement (66.2) prise également selon la direction d'écoulement.

9. Ensemble propulsif selon l'une des revendications 3 à 8, **caractérisé en ce que** le carénage de jonction (30) comprend au moins un actionneur (68) pour favoriser un mouvement d'ouverture du capot (40) et/ou pour le maintenir en position ouverte.

10. Ensemble propulsif selon l'une des revendications précédentes, **caractérisé en ce que** le système de liaison (34) comprend au moins une liaison avant (52) et au moins une liaison arrière (54), chaque liaison avant (52) étant configurée pour autoriser un mouvement de translation selon une direction longitudinale, chaque liaison arrière (54) étant configurée pour autoriser un mouvement de pivotement autour d'un axe de rotation horizontal et perpendiculaire à la direction longitudinale.

11. Aéronef comprenant au moins un ensemble propulsif selon l'une des revendications précédentes.

## Patentansprüche

1. Antriebseinheit eines Luftfahrzeugs, welche eine Gondel (18), einen Pylon (22) sowie eine Verbindungsverkleidung (30), die eine die Kontinuität zwischen der Gondel (18) und dem Pylon (22) sicherstellende aerodynamische Oberfläche aufweist, umfasst, wobei die Verbindungsverkleidung (30) einen festen Rahmen (32) umfasst, der mit der Gondel (18) und mit dem Pylon (22) durch ein Verbindungssystem (34) verbunden ist, das dafür ausgelegt ist, im Betrieb eventuelle Verformungen und/oder Fehlausrichtungen zwischen der Gondel (18) und dem Pylon (22) zu absorbieren, **dadurch gekennzeichnet, dass** der feste Rahmen (32) eine Außenwand (36) aufweist, die eine Öffnung (38) umfasst, und dadurch, dass die Verbindungsverkleidung (30) außerdem umfasst:
- eine Haube (40), die zwischen einer geschlossenen Position, in welcher die Haube (40) die Öffnung (38) verschließt, und einer offenen Position, in welcher die Haube (40) die Öffnung (38) wenigstens teilweise freigibt, beweglich ist und die eine Platte (44) aufweist,
- wobei die Außenwand (36) des festen Rahmens (32) und die Platte (44) der Haube (40) Außenflächen aufweisen, welche die aerodynamische Oberfläche der Verbindungsverkleidung (30) bilden.

2. Antriebseinheit nach Anspruch 1, **dadurch gekennzeichnet, dass** die Platte (44) der Haube (40) eine Kontur (56) aufweist, die im Wesentlichen identisch mit einem inneren Umfangsrand (48) der Außenwand (46) ist, der die Öffnung (38) begrenzt, so dass die Außenfläche der Platte (44) der Haube (40) mit der Außenfläche der Außenwand (36) des festen Rahmens (32) bündig ist.

3. Antriebseinheit nach Anspruch 1 oder 2, **dadurch gekennzeichnet, dass** die Verbindungsverkleidung (30) wenigstens ein Gelenk (42) umfasst, das die Haube (40) und den festen Rahmen (32) verbindet.

4. Antriebseinheit nach dem vorhergehenden Anspruch, **dadurch gekennzeichnet, dass** das Gelenk (42) eine Schwenkverbindung ist, die der Haube (40) ermöglicht, um eine Schwenkachse (A42) zu schwenken.

5. Antriebseinheit nach Anspruch 3 oder 4, **dadurch gekennzeichnet, dass** die Verbindungsverkleidung (30) ein Verriegelungssystem (60) umfasst, das dafür ausgelegt ist, die Haube (40) in der geschlossenen Position zu halten.

6. Antriebseinheit nach dem vorhergehenden Anspruch, **dadurch gekennzeichnet, dass** das Gelenk (42) in der Nähe einer ersten Seite (56.1, 56.2) der Haube (40) positioniert ist, und dadurch, dass das Verriegelungssystem (60) an einer der ersten Seite (56.1, 56.2) gegenüberliegenden zweiten Seite (56.1, 56.2) der Haube (40) positioniert ist.

7. Antriebseinheit nach einem der Ansprüche 3 bis 6, **dadurch gekennzeichnet, dass** die Verbindungsverkleidung (30) ein Zentriersystem (64) umfasst, das dafür ausgelegt ist, die Haube (40) in einer Strömungsrichtung eines Luftstroms zu blockieren, der im Betrieb über die aerodynamische Oberfläche der Verbindungsverkleidung (30) strömt.

8. Antriebseinheit nach dem vorhergehenden Anspruch, **dadurch gekennzeichnet, dass** das Zentriersystem (64) wenigstens ein Zentrierelement (66) umfasst, das einen mit der Haube (40) fest verbundenen Zapfen (66.1) und eine mit dem festen Rahmen (32) fest verbundene Aufnahme (66.2) aufweist, wobei der Zapfen (66.1) und die Aufnahme (66.2) dafür ausgelegt sind, einen in Eingriff befindlichen Zustand einzunehmen, wenn sich die Haube (40) in der geschlossenen Position befindet, in welchem der Zapfen (66.1) in der Aufnahme (66.2) positioniert ist, und einen außer Eingriff befindlichen Zustand, in welchem der Zapfen (66.1) außerhalb der Aufnahme (66.2) positioniert ist, wobei der Zapfen (66.1) eine in der Strömungsrichtung gemessene erste Abmessung aufweist, die im Wesentlichen identisch mit einer ebenfalls in der Strömungsrichtung gemessenen zweiten Abmessung der Aufnahme (66.2) ist.

9. Antriebseinheit nach einem der Ansprüche 3 bis 8, **dadurch gekennzeichnet, dass** die Verbindungsverkleidung (30) wenigstens einen Aktuator (68) zum Unterstützen einer Öffnungsbewegung der Haube (40) und/oder zum Halten derselben in der offenen Position umfasst.

10. Antriebseinheit nach einem der vorhergehenden Ansprüche, **dadurch gekennzeichnet, dass** das Verbindungssystem (34) wenigstens eine vordere Verbindung (52) und wenigstens eine hintere Verbindung (54) umfasst, wobei jede vordere Verbindung (52) dafür ausgelegt ist, eine Translationsbewegung in einer Längsrichtung zu ermöglichen, wobei jede hintere Verbindung (54) dafür ausgelegt ist, eine Schwenkbewegung um eine horizontale und zur Längsrichtung senkrechte Drehachse zu ermöglichen.

11. Luftfahrzeug, welches wenigstens eine Antriebseinheit nach einem der vorhergehenden Ansprüche umfasst.

## Claims

1. Propulsive assembly of an aircraft comprising a nacelle (18), a pylon (22) and a connecting fairing (30) having an aerodynamic surface ensuring a continuity between the nacelle (18) and the pylon (22), the connecting fairing (30) comprising a fixed frame (32), linked to the nacelle (18) and to the pylon (22) by a link system (34) configured to absorb any deformations and/or misalignments between the nacelle (18) and the pylon (22) in operation, **characterized in that** the fixed frame (32) has an outer wall (36) comprising an opening (38), and **in that** the connecting fairing (30) further comprises
- a cover (40), that is movable between a closed position in which the cover (40) closes the opening (38) and an open position in which the cover (40) at least partially frees the opening (38), which has a panel (44),
- the outer wall (36) of the fixed frame (32) and the panel (44) of the cover (40) having outer surfaces which form the aerodynamic surface of the connecting fairing (30) .

2. Propulsive assembly according to Claim 1, **characterized in that** the panel (44) of the cover (40) has an outline (56) substantially identical to an internal peripheral edge (48) of the outer wall (46) delimiting the opening (38) such that the outer surface of the panel (44) of the cover (40) is flush with the outer surface of the outer wall (36) of the fixed frame (32) .

3. Propulsive assembly according to Claim 1 or 2, **characterized in that** the connecting fairing (30) comprises at least one articulation (42) linking the cover (40) and the fixed frame (32).

4. Propulsive assembly according to the preceding claim, **characterized in that** the articulation (42) is a pivoting link allowing the cover (40) to pivot about a pivoting axis (A42).

5. Propulsive assembly according to Claim 3 or 4, **characterized in that** the connecting fairing (30) comprises a locking system (60) configured to keep the cover (40) in closed position.

6. Propulsive assembly according to the preceding claim, **characterized in that** the articulation (42) is positioned in proximity to a first side (56.1, 56.2) of the cover (40) and **in that** the locking system (60) is positioned on a second side (56.1, 56.2) of the cover (40) opposite the first side (56.1, 56.2).

7. Propulsive assembly according to one of Claims 3 to 6, **characterized in that** the connecting fairing (30) comprises a centring system (64) configured to immobilize the cover (40) in a direction of flow of an air flow flowing over the aerodynamic surface of the connecting fairing (30) in operation.

8. Propulsive assembly according to the preceding claim, **characterized in that** the centring system (64) comprises at least one centerer (66) comprising a pin (66.1) secured to the cover (40) and a housing (66.2) secured to the fixed frame (32), the pin (66.1) and the housing (66.2) being configured to occupy an engaged state, when the cover (40) is in closed position, in which the pin (66.1) is positioned in the housing (66.2), and a disengaged state in which the pin (66.1) is positioned outside the housing (66.2), the pin (66.1) having a first dimension taken in the direction of flow that is substantially identical to a second dimension of the housing (66.2) taken also in the direction of flow.

9. Propulsive assembly according to one of Claims 3 to 8, **characterized in that** the connecting fairing (30) comprises at least one actuator (68) to promote an opening movement of the cover (40) and/or to keep it in open position.

10. Propulsive assembly according to one of the preceding claims, **characterized in that** the link system (34) comprises at least one front link (52) and at least one rear link (54), each front link (52) being configured to allow a translational movement in a longitudinal direction, each rear link (54) being configured to allow a pivoting movement about a horizontal axis of rotation at right angles to the longitudinal direction.

11. Aircraft comprising at least one propulsive assembly according to one of the preceding claims.
